# EUROPEAN PATENT APPLICATION

(11) **EP 0 887 632 A1**
(43) Date of publication of application: **30.12.1998**
(21) Application number: 98304965.1
(22) Date of filing: 24.06.1998
(51) Int. Cl.: G01K 1/12

(54) **A ceramic thermocouple for measuring temperature of molten metal**

(30) Priority: 24.06.1997 JP 181838/97; 11.08.1997 JP 227072/97; 08.09.1997 JP 257977/97
(71) Applicant: ISUZU CERAMICS RESEARCH INSTITUTE CO., LTD., Fujisawa-shi, Kanagawa-ken (JP)
(72) Inventor: Kita, Hideki, Fujisawa-shi, Kanagawa-ken 251-0044 (JP); Itakura, Isao, Chigasaki-shi, Kanagawa-ken 253-0085 (JP)
(74) Representative: Jenkins, Peter David

(57) **Abstract**

The present invention provides a molten metal temperature measuring ceramic thermocouple that has a long life, improves temperature measurement responsiveness and measuring accuracy and enables repetitive use. In this molten metal temperature measuring ceramic thermocouple, a pair of tungstenrhenium alloy strands(6,7,26,27,46,47) of dissimilar compositions are installed in the protecting tube(2,21, 41) of ceramics such as silicon nitride, and the outer protecting tube(1,22,42,44) made of cermet having Mo as a base is arranged on the outer side of the protecting tube(2,21,41). The interiors of the protecting tube(2, 21,41) and the outer protecting tube(1,22,42,44) are filled with the filler members(3,4,23,43) having silicon nitride as a main component with the strands(6, 7,26,27,46,47) embedded therein. The end portion of the protecting tube(2,21,41) is fitted with the sealing members(8,9,10,28,48) comprising heat resisting members and heat resisting glass members.

## Description

The present invention relates to a ceramic thermocouple with a protecting tube for measuring the temperature of molten metal such as iron and cast iron.

A thermocouple that has been in use to measure the temperature of molten cast iron at about 1500 °C comprises Pt-Rh strands-which have a high melting point and are stable in the atmosphere-and a paper pipe to which the Pt-Rh strands are secured. Such a thermocouple becomes unable to make accurate measurement after taking one or two temperature measurements of molten cast iron, and it is current practice to discard the used thermocouple. The thermocouple, because it cannot be used repetitively a number of times, is very expensive.

A sheath type thermocouple is known to have of strands made of chromel-alumel(CA), Pt-Rh and the same, and a metal sheath type protecting tube made of such metal as stainless steel (SUS) that is used at high temperatures. Some stainless steel sheath type thermocouples can not be used in an atmosphere 1000 °C or higher. In that case, they are made of a special heat resisting alloy such as inconel.

There is also a thermocouple that is known to have a structure in which Pt-Rh strands are installed in a protecting tube made of cermet.

Japanese Patent Laid-Open No. 160200/1994 discloses a sheath type thermocouple with a gas-tight terminal. This thermocouple does not cause measuring errors even when a temperature gradient is produced at the terminal portion by transient temperature variations. Thermocouple strands of dissimilar metals-alumel wire and chromel wire-are installed in the stainless steel sheath and insulated from each other by an inorganic insulating material. The base end side of the sheath is hermetically sealed by the gas-tight terminal portion. The gas-tight terminal portion has a ceramic end plate which is mounted with two kovar piercing pipes, in which insulating sleeves are inserted. The thermocouple strands are individually drawn out through these insulating sleeves without directly contacting the piercing pipes.

The thermocouples have the following thermoelectromotive forces according to the types. The PR (Pt-Rh) thermocouple has a thermoelectromotive force of 1.241 mV at 500°C and 4.833 mV at 1000 °C. The CA (chromel-alumel) thermocouple has a thermoelectromotive force of 20.64 mV at 500°C and 41.269 mV at 1000 °C. Further, the W-Re thermocouple has a thermoelectromotive force of 8.655 mV at 500°C and 18.257 mV at 1000 °C.

The Pt-Rh thermocouple cannot be used in an inert gas ambient and its service temperature in the atmosphere is 1500°C at the maximum. The CA thermocouple can be used in both the atmosphere and the inert gas ambient and has the maximum service temperature of 800°C. Further, the W-Re thermocouple is used in principle in the atmosphere and the inert gas ambient and has the maximum service temperature of 400 °C in the atmosphere and 2300 °C(the highest) in the inert gas ambient.

As to the PR thermocouple using the Pt-Rh strands, because its thermoelectromotive force is as small as about 1/15 that of the CA thermocouple and about 1/7 that of the W-Re thermocouple, there is a drawback that its measuring precision is lower and responsiveness slower than the latter two thermocouples. Hence, to measure the temperature of the blast furnace, a worker is forced to stay at the measuring site near the smelting furnace for about eight seconds until the temperature of the furnace stabilizes.

Moreover, the conventional thermocouples have another drawback that, during the measurement, molten metal such as iron and cast iron adheres to the thermocouples, which deteriorates the responsiveness of the thermocouples and requires a complex process of removing the adhering metal. A further drawback is that the existing thermocouples have a life of only about two measurements and their replacement takes time and labor. The W-Re strands of the thermocouple are easily oxidized in the atmosphere and cannot be used for measuring the temperature of molten cast iron. Still another problem is that molten iron easily sticks to the outer protecting tube.

It is an aim of this invention to solve the above problems and to provide a molten metal temperature measuring ceramic thermocouple in which front ends of a pair of metal strands of dissimilar compositions are joined together to form a temperature measuring point and the paired metal strands are installed in a ceramic first protecting tube filled with a porous member, and in which the first protecting tube is contained in an outer protective means of cermet having Mo as a base, thereby preventing reaction of the ceramics with the molten iron, improving heat resistance, resistance against loss by melting or melt-away resistance and corrosion resistance, enabling repetitive use of the thermocouple.

Another aim of this invention is to improve the responsiveness and durability and to provide a molten metal temperature measuring thermocouple in which the heat capacity of the front end portion of the thermocouple and the escape of heat to the rear and the side of the first protecting tube are made as small as possible in order to concentrate the heat of the molten metal on the temperature measuring point at the front end portion of the thermocouple in a short time; and in which the heat passage area is reduced, the thermocouple is constructed in a heat insulating structure, and the material of the thermocouple has sufficient durability and heat resistance and hardly reacts with iron.

This invention relates to a ceramic thermocouple for measuring the temperature of molten metal, which comprises: a first protecting tube made of any one of ceramics of silicon nitride and sialon; an outer protective means made of cermet with Mo as a base and provided on the outside of the first protecting tube; a pair of metal strands of dissimilar compositions joined together at a front end portion of, and inside, the first protecting tube to form a temperature measuring portion; filler members of nonconductive ceramics filled in the first protecting tube to contain the strands therein; and first sealing members provided at an end of the first protecting tube to seal the interior of the first protecting tube.

The materials forming the metal strands are tungsten-rhenium alloys.

To prevent oxidation of the metal strands, an inert gas such as N₂ and Ar is sealed in the first protecting tube. Thus the strands installed in the inner protecting tube and the outer protective means are free from oxidation, improving their heat resistance and durability. That is, because the W-Re strands are sealed in an inert gas, the thermal electromotive force of the W-Re strands is relatively large, giving a good temperature responsiveness. The W-Re strands have a melting point of 3000°C and are not melted in molten cast iron.

Further, the filler members are made of a porous ceramics having silicon nitride as a main component. Alternatively, the filler members are reaction-sintered silicon nitride having Ti added thereto. Or the filler members are a dehydration condensed heat resistant glass containing P, SiO₂ and the like.

In this molten metal temperature measuring ceramic thermocouple, the first protecting tube made of ceramics such as silicon nitride is enclosed and protected by the outer protective means as an outer shell made of cermet having Mo as a base. Because the first protecting tube is not in direct contact with the molten metal, ceramics is free from reaction with molten iron, thereby improving heat resistance and melt-away resistance. This enables the thermocouple to measure the temperature of an object such as molten metal with high precision and swiftness even after repetitive use, thus prolonging the life of the thermocouple. The temperature measuring region is limited by the porous member in the first protecting tube to make it difficult for the heat of the temperature measuring region to escape through the inside of the outer protective means toward the rear. This in turn allows the heat capacity of the temperature measuring region to be reduced, improving the temperature measuring response of the thermocouple.

The outer protective means is formed as the second protecting tube or the coating, and is provided at its end with the second sealing members that seal the interior of the outer protective means.

The first sealing members provided at the end of the outer protective means comprise dense, heat resisting members and heat resisting glass members placed in contact with the heat resisting members.

A heat resisting glass layer is provided between the first protecting tube and the outer protective means. That is, because the heat resisting glass layer is arranged on the inner wall surface of the outer protective means, if cracks develop in the outer protective means, the heat resisting glass layer fills in the spaces in the cracks, thus preventing a catastrophic destruction even when the cermet of the first protecting tube is cracked due to thermal impacts. This in turn prevents the first protecting tube of ceramics from directly contacting the molten iron, improving the heat resistance and melt-away resistance.

The first protecting tube is installed inside the outer protective means and the portion of the interior of the outer protective means where the first protecting tube is not present is filled with a porous member which in turn is injected with an inert gas such as N₂ and Ar.

The thermal conductivity of the porous member filled in the outer protective means is set smaller than that of the filler members filled in the first protecting tube. Hence, the thermal conduction to the outside through the interior of the outer protective means is suppressed, allowing the heat capacity of the temperature measuring region of the thermocouple to be made small and improving the responsiveness of the thermocouple.

The outer protective means is treated either with cementation or nitration. The outer protective means therefore has an increased hardness, an enhanced strength against external forces, and an improved durability.

The part of the outer protective means provided on the outer side of the first protecting tube constitutes a portion that is immersed in the molten metal.

The outer protective means is fitted at its end with a metal pipe filled with ceramic fibers. Further, the ends of the metal strands are each connected with compensation conductors extending through the metal pipe.

The coating such as flame-sprayed coating as the external protective means is formed of any one, or a combination, of Mo-ZrO₂, Mo-ZrB₂ and Mo-ZrN, all these having small thermal expansion coefficients and hardly reacting with iron.

In this molten metal temperature measuring ceramic thermocouple, the outer protective means comprises a third protecting tube arranged on the outer side of the temperature measuring portion of the first protecting tube with its open end portion projecting from the first protecting tube and made of the cermet having melt-away resistance. The first sealing members are formed of dense, heat resisting members and heat resisting glass. Hence, the air present in the open end portion of the third protecting tube protruding from the end of the first protecting tube is trapped in the open end portion when immersed in the molten iron, thus preventing the molten iron from entering the open end portion.

The outer circumferential surface of the third protecting tube is formed with a coating, which is made of a material having Mo as a base scattered with one of ZrB₂ and ZrN, both having small thermal expansion coefficients and hardly reacting with iron.

A heat resisting glass layer containing SiO₂ as a main component is formed in a space between the first protecting tube and the third protecting tube. The heat resisting glass layer, if cracks are formed in the outer protective means due to thermal impacts, fills in the cracks and thereby prevents the inner protecting tube from directly contacting the molten metal, improving the durability.

The air present in the open end portion of the third protecting tube projecting from the end of the first protecting tube is trapped in the open end portion when immersed in the molten iron, thus preventing entry of the molten iron into the open end portion.

The front end portion of the temperature measuring portion is constructed in a two-layer structure comprising the first protecting tube and the third protecting tube arranged on the outside of the first protecting tube, and a heat capacity and a heat passage area of the front end portion are made as small as possible to reduce heat conduction to a rear portion of the first protecting tube.

The outer protective means is a fourth protecting tube made of cermet having Mo as a base and mounted over the first protecting tube through a heat insulating layer, and a coating having a small thermal expansion coefficient and hardly reacting with iron is arranged on an outer surface of the first protecting tube.

The first protecting tube is formed into a size 5 mm or less in diameter.

The heat insulating layer interposed between the first protecting tube and the fourth protecting tube comprises a heat insulating air layer and ceramic fibers to prevent an outflow of heat from a side surface of the first protecting tube.

End portions of the first protecting tube and the fourth protecting tube opposite the temperature measuring portion are secured to a metal support pipe by a collet chuck with a space between the first protecting tube and the fourth protecting tube closed.

As described above, the molten metal temperature measuring ceramic thermocouple has the first protecting tube made as small in diameter as possible and formed of a heat resisting material such as silicon nitride, with its surface flame-sprayed with a coating that is hardly wetted with metal such as iron. This construction prevents breakage of the slender first protecting tube and the escape of heat from the side surface of the fifth protecting tube. Provided around the first protecting tube is the heat resistant outer cylinder or the fourth protecting tube. The heat insulating layer comprising an air layer and ceramic fibers is provided between the first protecting tube and the fourth protecting tube. Although the front end portion of the fourth protecting tube and the first protecting tube is open, the air layer is enclosed when the thermocouple is immersed in the molten metal, preventing the molten metal from entering between the two protecting tubes. Thus the heat insulating effect is produced. The diameters of the alloy strands are made as small as possible to prevent heat from escaping through the strands.
Figure 1 is a cross section showing the ceramic thermocouple for measuring the temperature of molten metal as the first embodiment of this invention;
Figure 2 is a cross section showing the ceramic thermocouple for measuring the temperature of molten metal as the second embodiment of this invention;
Figure 3 is an enlarged cross section of a front end portion of the molten metal temperature measuring ceramic thermocouple of Figure 2;
Figure 4 is a graph showing a responsiveness of the product of this invention of Figure 2 and that of another product for comparison;
Figure 5 is a cross section showing the molten metal temperature measuring thermocouple as the third embodiment of this invention; and
Figure 6 is an enlarged cross section of a fifth protecting tube of the molten metal temperature measuring thermocouple of Figure 5.

Now, embodiments of the ceramic thermocouple for measuring the temperature of molten metal according to this invention will be described by referring to the accompanying drawings.

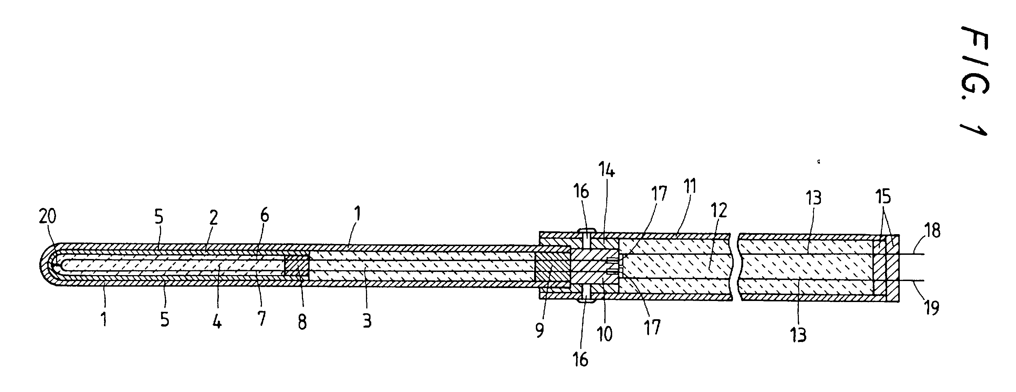

First, let us turn to Figure 1 to describe the first embodiment of the ceramic thermocouple for measuring the molten metal temperature according to this invention.

As shown in Figure 1, the ceramic thermocouple for measuring the molten metal temperature uses an outer protecting tube 1 (second protecting tube) as an external protection means, in which an inner protecting tube 2 (first protecting tube) is sealed, in order to improve heat resistance and resistance against loss by melting or melt-away resistance. Tungsten-rhenium alloy strands (W-Re alloy strands) 6, 7 extend into both the inner protecting tube 2 and the outer protecting tube 1. The outer protecting tube 1 and the inner protecting tube 2 are filled with porous members 3, 4 made mainly of silicon nitride porous material to prevent breakage of the W-Re strands 6, 7 due to oxidation corrosion. The inner protecting tube 2 is made of ceramics chosen from among silicon nitride (Si₃N₄), sialon (Si-Al-O-N) and silicon carbide (SiC). The outer protecting tube 1 is made from a carbide-based cermet or nitride-based cermet, with Mo as a base. When the outer protective means is formed of a coating such as spray coating, the coating may be selected from Mo-ZrO₂, Mo-ZrB₂ and Mo-ZrN. The coating produces a similar effect to that of the outer protecting tube 1, and thus is designated with the same reference numeral 1 as the outer protecting tube.

The ceramic thermocouple mainly comprises: an inner protecting tube 2 made of the above ceramics; an outer protective means such as outer protecting tube 1 or coating 1 provided outside the inner protecting tube 2 to enclose it (the outer protective means will be representatively referred to as the outer protecting tube 1); a pair of W-Re strands 6, 7 of dissimilar compositions which form a temperature measuring portion at a joint portion 20 at the front end of, and inside, the inner protecting tube 2; porous members 3, 4 made mainly of silicon nitride and filled in the inner protecting tube 2 and the outer protecting tube 1 in such a way as to contain the W-Re strands 6, 7; and a first sealing member 9 provided at the end of the outer protecting tube 1 to seal the interior of the outer protecting tube 1. A part of the outer protecting tube 1 that accommodates the inner protecting tube 2 constitutes a portion that enters into an object to be measured, such as molten metal.

In this ceramic thermocouple, the outer protecting tube 1 forming the outer shell and made of cermet in particular has excellent heat resistance and melt-away resistance and, if cracked by thermal shock, will lead to a gradual break and not result in a catastrophic destruction as is observed with an outer shell made of, for example, ceramics. Further, the outer protecting tube 1 is either cemented or nitrided to increase its hardness. The inner protecting tube 2 sealed in the outer protecting tube 1 is made of ceramics having silicon nitride as a main component. Although silicon nitride reacts with iron and is heavily melted away exhibiting a less thermal impact resistance than that of cermet, the inner protecting tube 2 is kept out of direct contact with the molten iron and thus can be reduced in heat transfer coefficient, which in turn prevents breakage of the inner protecting tube 2 due to thermal impacts.

Because the ceramic thermocouple can be constructed so that the total heat capacity of the outer protecting tube 1 and the inner protecting tube 2 is small, forming the protecting tube in a two-layer structure does not reduce the temperature measurement responsiveness. Further, a heat resisting glass layer 5 is provided between the inner protecting tube 2 and the outer protecting tube 1 and thus can improve a fixed temperature thermal conductivity between the outer protecting tube 1 and the inner protecting tube 2. Particularly when a crack develops in the outer protecting tube 1, the heat resisting glass layer 5 infiltrates into the cracked portion filling a space in the crack and thereby preventing a catastrophic destruction of the outer protecting tube 1.

The first sealing member provided at the end of the outer protecting tube 1 is constructed in a two-layer structure comprising a dense heat resisting member 9 of, for example, silicon nitride and a heat resisting glass member 10 arranged in contact with the heat resisting member 9. Further, at the end of the inner protecting tube 2 is provided a sealing member 8 of dense heat resisting material, such as heat resisting glass and silicon nitride, that hermetically seals the interior of the inner protecting tube 2. To seal an inert gas such as N₂ and Ar inside the outer protecting tube 1 and the inner protecting tube 2, the sealing member 8 is hermetically fitted in the end of the inner protecting tube 2 and the heat resisting member 9 of silicon nitride and the heat resisting glass member 10 are hermetically fitted at the end of the outer protecting tube 1. The inert gas such as N₂ and Ar sealed in the interior of the outer protecting tube 1 and the inner protecting tube 2 prevents oxidation of the W-Re strands 6, 7.

The heat conductivity of the porous member 3 filled in the outer protecting tube 1 is smaller than that of the porous member 4 filled in the inner protecting tube 2. The porous member 3 may, for example, be constructed to have a greater number of pores than the porous member 4 to make its heat conductivity smaller. Hence, with this ceramic thermocouple, the heat capacity of the temperature measuring part that accommodates the inner protecting tube 2 and which is to be inserted in a molten metal such as iron can be made small, thus blocking the heat conduction from the temperature measuring part to the rear part.

The end of the outer protecting tube 1 is mounted with a metal pipe 11 through a fixing ring 14, the metal pipe 11 being filled with ceramic fibers 12. The outer protecting tube 1 is secured with the fixing ring 14, which is fixed to the metal pipe 11 by fittings 16. The ceramic fibers 12 may, for example, be formed of ceramic fibers such as SiC whiskers or a Si₃N₄-based reaction-sintered ceramics. The ends of the W-Re strands 6, 7 are each connected with compensation conductors 13 extending into the metal pipe 11. The W-Re strands 6, 7 drawn out of the outer protecting tube 1 are connected to the paired compensation conductors 13 by connection screws 17. One of the compensation conductors 13 forms a plus terminal 18 and the other a minus terminal 19. The end of the metal pipe 11 is sealed with a double silicon nitride plug 15.

In the first embodiment, the paired W-Re strands 6, 7 comprise two W-5Re and W-26Re strands with different compositions, both of which are 0.5 mm in diameter and 300 mm in length and are welded together at their front ends to form a joint portion 20. First, the W-Re strands 6, 7 were padded with raw material powder mainly of silicon nitride and then installed in the inner protecting tube 2 of silicon nitride 6.5 mm in outer diameter and 120-150 mm in length, after which the above raw material powder is filled in the inner protecting tube 2. An inert gas is injected into the inner protecting tube 2 and the end of the inner protecting tube 2 was sealed with the sealing member 8 of heat resisting glass.

Next, the inner protecting tube 2 was inserted into the outer protecting tube made of cermet of Mo/ZrO₂ which has an inner diameter of 7 mm, and the clearance between the outer protecting tube 1 and the inner protecting tube 2 was filled with heat resisting glass to fix them together with the heat resisting glass layer 5. Further, the outer protecting tube 1 is filled with a raw material powder mainly of silicon nitride mixed with a large amount of fibers to form many pores therein and at the same time injected with an inert gas. The end of the outer protecting tube 1 was sealed with the heat resisting member 9 and the heat resisting glass member 10, both forming a sealing member. Then, the ends of the W-Re strands 6, 7 were connected with the compensation conductors 13, and the outer protecting tube 1 was securely mounted with the fixing ring 14, which was connected with the metal pipe 11 of, say, stainless steel. Next, ceramic fibers were filled in the interior of the metal pipe 11, the end of which was sealed with the plug 15. In this way the ceramic thermocouple for measuring the molten metal temperature was manufactured.

Using the above molten metal temperature measuring ceramic thermocouple, measurements were made of the temperature of molten cast iron, which was approximately 1450°C. It took about 10 seconds for the raw material powder to be fired and stabilized, and this cycle of measurement was repeated 200 times. Cracks were observed in the outer protecting tube 1 but had no adverse effects on the temperature measuring performance. In this state more than 1000 measurements were taken of the temperature of molten cast iron. No changes were detected in the electromotive force of the ceramic thermocouple and the temperature measurements were able to be performed stably.

In addition to the above temperature measurements of molten cast iron, measurements were also taken successively of the temperature of molten metal, which was about 1500°C, by using the above ceramic thermocouple. More than 500 hours after the start of the temperature measurements, no anomalies such as changes in the electromotive force of the ceramic thermocouple were observed. That is, this ceramic thermocouple was found to have an excellent heat resistance and an excellent melt-away resistance.

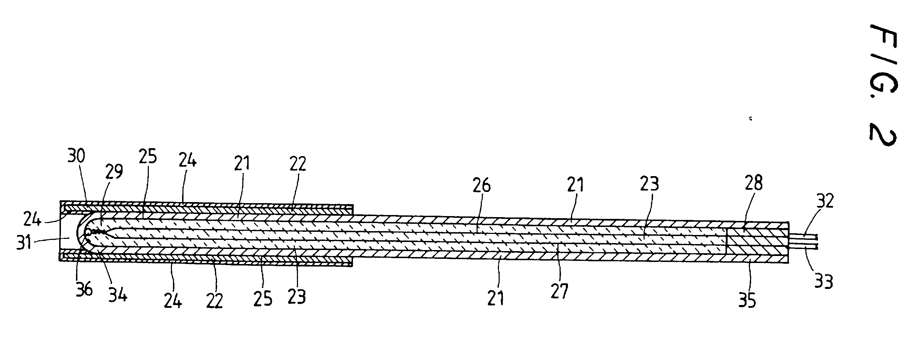

Next, referring to Figures 2, 3 and 4, the second embodiment of the ceramic thermocouple for the molten metal temperature measurement according to this invention will be described.

As shown in Figure 2, this ceramic thermocouple has the temperature measuring area of the protecting tube 21 (first protecting tube) covered with a protecting tube 22 (third protecting tube) as an outer protecting tube in the temperature measuring area to improve heat resistance and melt-away resistance. The tungsten-rhenium alloy strands (W-Re strands) 26, 27 comprise a W-5Re strand 26 and a W-26Re strand 27, both extending along and inside the protecting tube 21 and spaced apart from each other. The tungsten-rhenium alloy strands 26,27 are connected together at one end to form a temperature measuring portion 29 in the protecting tube 21 and at the other end are connected with terminals 32, 33 extending from the end of the protecting tube 21. To prevent breakage of the W-Re strands 26, 27 due to oxidation corrosion, the protecting tube 21 is filled with a filler member 23 of porous silicon nitride ceramics.

This ceramic thermocouple for the molten metal temperature measurement mainly comprises: a protecting tube 21; a pair of tungsten-rhenium alloy strands 26, 27 of dissimilar compositions installed in the protecting tube 21; a filler member 23 of porous silicon nitride ceramics filled in the protecting tube 21 to embed the tungsten-rhenium alloy strands 26, 27; a protecting tube 22 made of cermet containing Mo-which has a melt-away resistance as a base and arranged outside the temperature measuring portion 29 of the protecting tube 21 with its open end portion 30 projecting from the protecting tube 21; and a sealing member 28 made of dense heat resisting member and heat resisting glass that seals the end of the protecting tube 21.

The protecting tube 21 is made of ceramics selected from silicon nitride (Si₃N₄), sialon and, where appropriate, silicon carbide (SiC). The protecting tube 22 is made of carbide cermet with Mo as a base (Mo-ZrO₂). On the outer circumferential surface of the protecting tube 22 a coating 24 is formed by flame spraying using a composite material of Mo as a base scattered with ZrN and/or ZrB₂.

An intermediate layer 25 of glass, mainly SiO₂, is formed in a clearance between the protecting tube 21 and the protecting tube 22. Thus, if cracks develop in the cermet of the protecting tube 22, the glass of the intermediate layer 25 fills in the space in the cracks. Further, if cermet is cracked by thermal impacts, this does not result in a catastrophic destruction of the protecting tube 22.

The interior of the protecting tube 21 is filled with an inert gas such as Ar and N₂ to prevent oxidation of the tungsten-rhenium alloy strands 26, 27.

The air inside the open end portion 30 of the protecting tube 22 projecting from the front end portion 34 of the protecting tube 21 is sealed in the open end portion 30 when immersed in the molten iron, thus preventing the entry of the molten iron into the open end portion 30.

The temperature measuring region at the front end portion is formed in a two-layer structure by the protecting tube 21 and the protecting tube 22 arranged outside the protecting tube 21 to make the heat capacity and the heat passage area of the front end portion 34 as small as possible to reduce the heat transfer to a rear end portion 35 of the protecting tube 21.

The protecting tube 22 made of cermet in particular excels in the heat resistance and the melt-away resistance, and cracks, if produced in the protecting tube 22 by thermal shocks, lead to a slow destruction and do not result in a catastrophic destruction as is observed with the conventional ceramic outer shell. The protecting tube 21 sealed in the protecting tube 22 is made from ceramics having silicon nitride as a major component. Silicon nitride, when exposed to molten iron, reacts with iron and is heavily melted away exhibiting a less thermal impact resistance than that of the cermet. However, because the protecting tube 21 does not directly contact the molten iron, its thermal transfer coefficient can be made small thus preventing the protecting tube 21 from being broken by thermal impacts.

With this thermocouple, the total heat capacity of the protecting tube 21, the protecting tube 22 and the coating 24 can be made small, so constructing the front end portion of the temperature measuring region in the two-layer structure does not deteriorate the temperature measurement responsiveness. Further, the intermediate layer 25 is provided between the protecting tube 21 and the protecting tube 22 and therefore can improve the fixed temperature heat conductivity between the protecting tube 21 and the protecting tube 22. When cracks develop in the protecting tube 22, the glass infiltrates into the cracked portion filling in spaces in the cracks thus preventing a catastrophic destruction of the protecting tube 22.

The sealing member 28 provided at the rear end portion of the protecting tube 21 is constructed in a two-layer structure comprising a dense heat resisting member of silicon nitride and a heat resisting glass member arranged in contact with the heat resisting member. The interior of the protecting tube 21 is sealed with an inert gas such as N₂ and Ar during the process of filling the porous member 3. The end of the protecting tube 21 is fitted gas-tightly with the sealing member 28.

The filler member 23 filled in the protecting tube 21 is formed in a porous structure made from Si₃N₄-based reaction-sintered ceramics with its thermal conductivity made small. The thermal conductivity of the filler member 23 can be reduced, for example, by providing many pores in the filler member. Hence, this ceramic thermocouple can have a reduced heat capacity in the temperature measuring region-where the protecting tube 21 is situated-that is submerged in the molten iron, preventing heat conduction from the temperature measuring region to the rear region.

In the second embodiment, the paired W-Re strands 26, 27 comprise a W-5Re strand 26 and a W-26Re strand 27 of different compositions, both having a wire diameter of 0.5 mm and a length of 300 mm. They are welded together at the front end to form a joint portion 36. The W-Re strands 26, 27 were padded with raw material powder having silicon nitride as a main component. The protecting tube 21 was made of silicon nitride, 6.5 mm in outer diameter and 120-150 mm in length, with the front end portion 34 closed and the rear end portion 35 open. The W-Re strands 26, 27 padded with the raw material powder were inserted from the open rear end portion 35 of the protecting tube 21 and installed inside the protecting tube 21. Further, the space in the protecting tube 21 was filled with the raw material powder. The interior of the protecting tube 21 was also injected with an inert gas such as Ar and N₂ and then the rear end portion 35 of the protecting tube 21 was hermetically closed by the sealing member 28 of heat resisting glass.

The protecting tube 22 was made of cermet containing Mo as a base and ZrO₂ and formed to have an inner diameter of 7 mm. A coating 24 was formed on the outer circumferential surface of the protecting tube 22 by flame spraying using a composite material of Mo as a base scattered with ZrN and/or ArB₂. The protecting tube 21 was inserted into the protecting tube 22 sprayed with the coating 24. At this time, the protecting tube 22 was arranged so that its open end portion 30 projected from the front end portion 34 of the protecting tube 21 to form an air chamber 31. Next, the glass layer 25 of heat resistant glass is filled in a clearance between the protecting tube 21 and the protecting tube 22 to fix them together and the end portions of the protecting tubes are fixed and sealed with glass.

Using this ceramic thermocouple (of this invention), measurements were taken of the molten cast iron, which was about 1450°C. At this time it took about 8 seconds for the raw material powder to be fired and stabilized, and measurement of the molten iron was cycled 500 times. Cracks were observed in the protecting tube 22 but had no adverse effects on the temperature measuring performance. In this state more than 1000 measurements were taken of the temperature of molten cast iron. No changes were detected in the electromotive force of the ceramic thermocouple and the temperature measurements were able to be performed stably.

In addition to the above temperature measurements of molten cast iron, successive measurements were also taken of the temperature of molten metal, which was about 1500°C, by using the above ceramic thermocouple. More than 500 hours after the start of the temperature measurements, no anomalies such as changes in the electromotive force of the ceramic thermocouple were observed. That is, this ceramic thermocouple was found to have an excellent heat resistance and an excellent melt-away resistance.

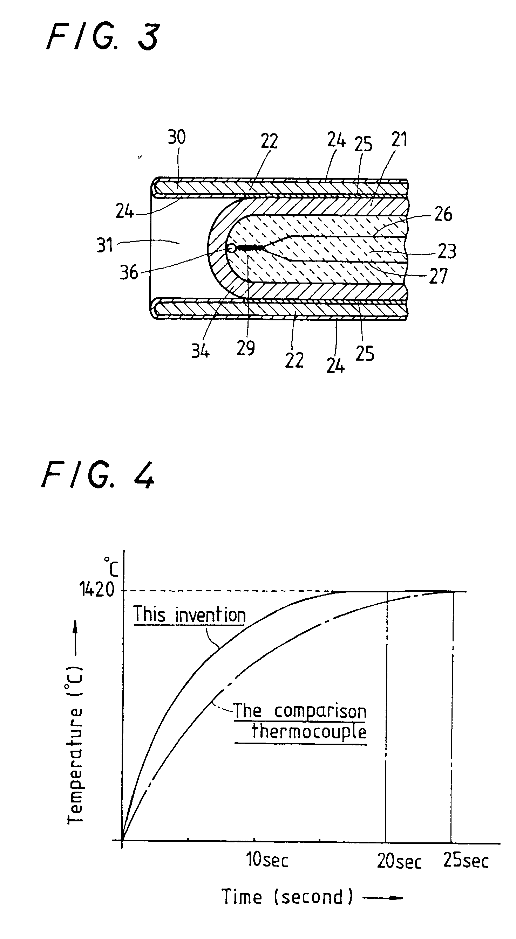

For comparison with this molten metal temperature measuring ceramic thermocouple (of this invention), a thermocouple was manufactured to have a structure in which the W-Re strands padded with the raw material powder are inserted into a protecting tube of silicon nitride 7 mm in inner diameter. The thermocouple manufactured for comparison was evaluated in terms of the responsiveness, the ease with which the molten iron sticks to the thermocouple and the durability. The evaluation has found that the responsiveness is slower than the thermocouple of this invention as shown in Figure 4 and that iron is more likely to stick to the silicon nitride protecting tube.

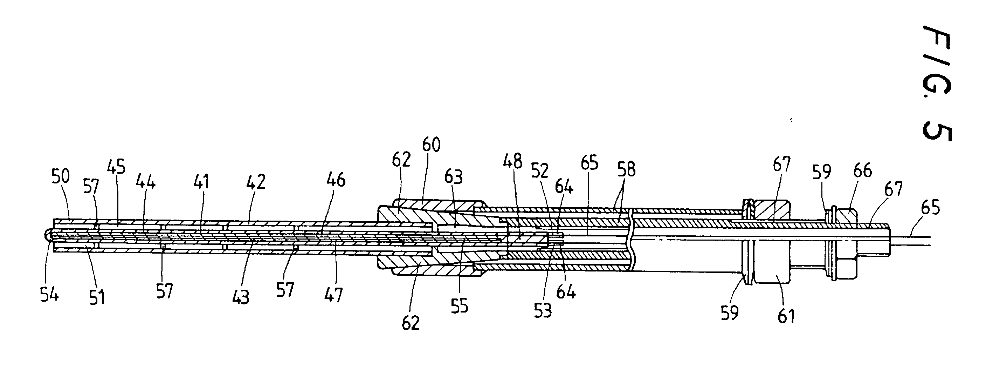

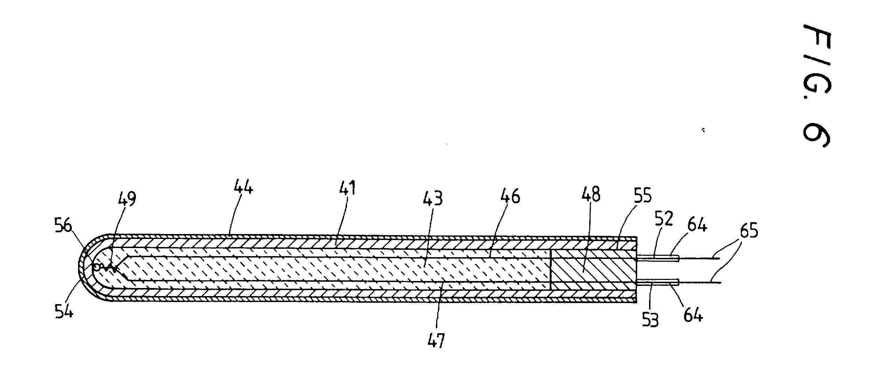

Next, by referring to Figures 5 and 6, the third embodiment of the molten metal temperature measuring thermocouple according to this invention will be described.

The molten metal temperature measuring thermocouple of the third embodiment has the temperature measuring region of a protecting tube 41 (first protecting tube) covered through a heat insulating layer 45 by a protecting tube 42 (fourth protecting tube) as an outer protecting tube in the temperature measuring region to improve the heat resistance and the melt-away resistance. This thermocouple mainly comprises: a protecting tube 41 closed at one end and open at the other end; a heat resistant coating 44 formed over the outer surface of the protecting tube 41, having a small thermal expansion coefficient and hardly reacting with iron; a pair of temperature sensing alloy strands 46, 47 of differing compositions arranged in the protecting tube 41 and joined together at a front end joint portion 56 to form a temperature measuring portion 49; a filler member 43 filled in the protecting tube 41 to embed the alloy strands 46, 47; a sealing member 48 of dense heat resisting glass sealing the open end portion of the protecting tube 41, with the alloy strands 46, 47 drawn out therethrough; and a protecting tube 42 mounted over the outer circumferential surface of the protecting tube 41 through a heat insulating layer 45.

The protecting tube 41 is made of ceramics selected from silicon nitride (Si₃N₄), sialon, cermet (Mo-ZrO₂) with Mo as a base and, where appropriate, silicon carbide (SiC). The protecting tube 41 is formed in a size of 5 mm or less, for example, 3.5 mm in outer diameter. The protecting tube 42 is made of cermet with Mo as a base (Mo-ZrO₂). The coating 44 sprayed over the outer circumferential surface of the protecting tube 41 is formed of any one of Mo-ZrN, Mo-ZrB₂ and Mo-ZrO₂ that have small thermal expansion coefficients and hardly react with iron, or a combination of these. The outer circumferential surface may be flame-sprayed, as in the case of the protecting tube 41, with a coating of Mo-ZrN and/or Mo-ZrB₂ which have small thermal expansion coefficients and hardly react with iron. The sealing member 48 is formed of a dense heat resistant glass and seals the end of the protecting tube 41.

The paired alloy strands of dissimilar compositions arranged inside the protecting tube 41 are tungsten-rhenium alloy strands comprising a W-5Re strand 46 and a W-26Re strand 47. The W-5Re strand 46 and the W-26Re strand 47 are arranged to extend spaced apart inside the protecting tube 41. The front end portions of the W-5Re strand 46 and the W-26Re strand 47 are joined together to form the temperature measuring portion 49. The other ends of these strands are connected with terminals 52, 53 that extend from the end of the protecting tube 41. The terminals 52, 53 are connected with leads 65 (compensation conductors) in kovar tubes 64 extending from the sealing member 48 at the end of the protecting tube 41.

The heat insulating layer 45 formed in a space between the protecting tube 41 and the protecting tube 42 is formed of a layer containing a large amount of air or ceramic fibers such as silicon carbide fibers to prevent the outflow of heat from the side surface of the protecting tube 41. The protecting tube 41 is supported inside the protecting tube 42 by support rings 57 of silicon nitride arranged spaced apart in the heat insulating layer 45. The heat insulating layer 45 serves to prevent heat from flowing out from the outer circumferential surface of the protecting tube 41 and allows the heat capacity of the protecting tube 41 to be made as small as possible. The ends of the protecting tube 41 and the protecting tube 42 are secured to a metal pipe 58 as a stainless steel support rod by a collet chuck 62 having a tapered surface with a slit 63.

In Figure 5, the metal pipe 58 is constructed in a two-layer structure, in which an inner metal pipe 58 is secured with the collet chuck 62 having a tapered outer surface and an outer metal pipe 58 is secured with a collet chuck 60 having a tapered inner surface. The metal pipe 58 is formed at its end portion with a thread 67, over which a fixing nut 66 is screwed through a leaf spring 59. Fastening a nut 61 fitted over the thread 67 of the inner metal pipe 58 against the force of the leaf spring 59 causes the slit 63 of the collet chuck 62 to be fastened elastically by the collet chuck 60 and reduced in diameter, with the result that the collet chuck 62 tightens the protecting tube 41.

The interior of the protecting tube 41 is filled with the filler member 43 and also injected with an inert gas such as Ar and N₂ to prevent breakage of the W-Re strands 46, 47 due to oxidation corrosion. The filler member 43 is formed of porous silicon nitride ceramics with an additive of Ti (reaction-sintered silicon nitride ceramics) or heat resisting glass containing P, Si₃N₄, SiO₂, Fe₂O₃, Cr₂O₃ and the like.

The front end portion 54 of the protecting tube 41 is arranged to project slightly from the open end portion 50 of the protecting tube 42. With the thermocouple immersed in the molten metal, the open end portion 50 is sealed by the molten metal itself, sealing the air trapped between the protecting tube 41 and the protecting tube 42, thereby preventing the molten metal from entering between the protecting tube 41 and the protecting tube 42. The temperature measuring region of the front end portion 54 of the protecting tube 41 is constructed in a two-layer structure that includes the protecting tube 41 and the protecting tube 42 arranged on the outer side of the protecting tube 41. This allows the heat capacity and the heat passage area of the front end portion 54 to be made as small as possible to reduce heat transfer to the rear end portion 55 of the protecting tube 41.

Further, the protecting tube 42 made of cermet has excellent heat and melt-away resistances and, if cracks are formed, the presence of the heat insulating layer 45 ensures that the cracks by thermal impact will lead to a slow destruction rather than a catastrophic destruction as is observed with the conventional ceramic outer shell. The protecting tube 41 inserted in the protecting tube 42 is made from ceramics having silicon nitride as a main component. When exposed to molten metal such as iron, silicon nitride reacts with iron and is heavily melted away, so that its resistance to thermal impacts is not as high as that of cermet. But because the protecting tube 41 is kept out of direct contact with the molten iron, the thermal conductivity of the protecting tube 41 can be made small to prevent it from being destroyed by the thermal impacts.

With this thermocouple for the molten metal temperature measurement, because the total heat capacity of the protecting tube 41 and the heat resistant coating 44 can be made small, constructing the front end portion of the temperature measurement region in a two-layer structure will not degrade the responsiveness of the temperature measurement. The sealing member 48 provided at the rear end portion of the protecting tube 41 is formed of a dense heat resistant glass member. During the process of filling the filler member 43, the interior of the protecting tube 41 is injected with an inert gas such as N₂ and Ar. The end of the protecting tube 41 is then hermetically fitted with the sealing member 48 to seal the injected gas.

The filler member 43 filled in the protecting tube 41 is made of a material such as Si₃N₄-based reaction-sintered ceramics in a porous structure with its thermal conductivity made small. The thermal conductivity of the filler member 43 can be reduced, for example, by providing many pores in the filler member. Hence, this ceramic thermocouple can have a reduced heat-capacity in the temperature measuring region-where the protecting tube 41 is situated-that is submerged in the molten iron, preventing heat conduction from the temperature measuring region to the rear region.

In the third embodiment, the paired W-Re strands 46, 47 comprise a W-5Re strand 46 and a W-26Re strand 47 of different compositions, both having a wire diameter of 0.2 mm and a length of 200 mm. They are welded together at the front end to form a joint portion 56. The W-Re strands 46, 47 were padded with raw material powder of heat resistant glass having Si₃N₄ powder as a main component. The protecting tube 41 was made from silicon nitride, 3.5 mm in outer diameter and 120-150 mm in length, with the front end portion 54 closed and the rear end portion 55 open. The coating 44 of Mo-ZrN and Mo-ZrB₂ is flame-sprayed over the outer surface of the protecting tube 41. The W-Re strands 46, 47 padded with the raw material powder were inserted from the open rear end portion 55 of the protecting tube 41 and installed inside the protecting tube 41. Further, the interior in the protecting tube 41 was injected with an inert gas of Ar and N₂ and then the rear end portion 55 of the protecting tube 41 was hermetically sealed by the sealing member 48 of heat resistant, dense glass.

The protecting tube 42 is made from cermet of Mo as a base and ZrO₂ and formed to a size of 10 mm in outer diameter and 7 mm in inner diameter. The coating of composite material of Mo as a base scattered with ZrN and/or ZrB₂ is flame-sprayed over the outer circumferential surface of the protecting tube 42. The protecting tube 41 was inserted into the protecting tube 42 sprayed with the coating. At this time, the protecting tube 41 was inserted so that its front end portion 54 slightly projected from the open end portion 50 of the protecting tube 42. The support rings 57 are arranged at intervals between the protecting tube 41 and the protecting tube 42 to form air chambers 51 between the protecting tube 41 and the protecting tube 42. The air chambers 51 are filled with a heat insulating material to form a heat insulating layer 45. The end portions of the protecting tube 41 and the protecting tube 42 are secured to the metal pipe 58 of stainless steel by the collet chuck 62.

Using the molten metal temperature measuring thermocouple (of this invention) with the above construction, measurements were made of the temperature of molten cast iron, which was about 1450°C. It took about 4 seconds for the raw material powder forming the filler member 43 to be fired and stabilized, and measurement of the molten cast iron was cycled 500 times. In the thermocouple of this invention, cracks were observed in the protecting tube 42 after 500 cycles of temperature measurement of the cast iron but there was no problem with the molten cast iron temperature measurement performance. In this state, another 1000 or more measurements were taken of the temperature of the molten cast iron. It was verified that temperature measurements were able to be performed normally with no changes found in the electromotive force of the thermocouple.

In addition to the above temperature measurements of molten cast iron, successive measurements were also taken of the temperature of other molten metal, which was about 1500°C, by using the above ceramic thermocouple. More than 500 hours after the start of the temperature measurements, no anomalies such as changes in the electromotive force of the ceramic thermocouple were observed. That is, this ceramic thermocouple was found to have an excellent heat resistance and an excellent melt-away resistance.

For comparison with this molten metal temperature measuring thermocouple (of this invention), a thermocouple was manufactured to have a structure in which the W-Re strands padded with the raw material powder are inserted into the protecting tube of cermet 13 mm in outer diameter. The thermocouple manufactured for comparison was evaluated in terms of the responsiveness, the ease with which the molten iron sticks to the thermocouple and the durability. The evaluation has found that the responsiveness is slower than the thermocouple of this invention because of its larger outer diameter, with no response within 5 seconds. This shows that to improve the responsiveness the outer diameter of the protecting tube 41 should preferably be set to 5 mm or less.

## Claims

1. A ceramic thermocouple for measuring the temperature of molten metal comprising:
a first protecting tube(2,21,214) made of any one of ceramics of silicon nitride and sialon;
an outer protective means(1,22,42,44) made of cermet with Mo as a base and provided on the outside of the first protecting tube(2,21,24);
a pair of metal strands(6,7,26,27,46,47) of dissimilar compositions joined together at a front end portion of, and inside, the first protecting tube(2,21, 41) to form a temperature measuring portion;
filler members(3,4,23,43) of nonconductive ceramics filled in the first protecting tube(2,21,41) to contain the strands(6,7,26,27,46,47) therein; and
first sealing members(8,28,48) provided at an end of the first protecting tube(2,21,41) to seal the interior of the first protecting tube(2,21,41).

2. A ceramic thermocouple for measuring the temperature of molten metal according to claim 1, wherein the material forming the metal strands(6,7,26, 27,46,47) is a tungsten-rhenium alloy.

3. A ceramic thermocouple for measuring the temperature of molten metal according to claim 1, wherein the interior of the first protecting tube(2,21, 41) is filled with an inert gas to prevent oxidation of the metal strands(6,7,26,27,46,47).

4. A ceramic thermocouple for measuring the temperature of molten metal according to claim 1, wherein the filler members(3,4,23,43) are a porous ceramics having silicon nitride as a main component.

5. A ceramic thermocouple for measuring the temperature of molten metal according to claim 1, wherein the outer protective means(1) is formed as any one of a second protecting tube(1) and a coating(1) and second sealing members(8) are provided at an end of the outer protective means(1) to seal the interior of the outer protective means(1).

6. A ceramic thermocouple for measuring the temperature of molten metal according to claim 5, wherein the second sealing members(9,10) provided at the end of the outer protective means(1) comprise dense heat resisting members(9) and heat resisting glass members(10) placed in contact with the heat resisting members.

7. A ceramic thermocouple for measuring the temperature of molten metal according to claim 5, wherein a heat resisting glass layer(5) is provided between the first protecting tube(2) and the outer protective means(1).

8. A ceramic thermocouple for measuring the temperature of molten metal according to claim 5, wherein the first protecting tube(2) is installed inside the outer protective means(1), the interior of the outer protective means(1) where the first protecting tube(2) is not present is filled with a porous member(3), and the porous member(3) is injected with an inert gas of N₂ and Ar.

9. A ceramic thermocouple for measuring the temperature of molten metal according to claim 8, wherein a heat conductivity of the porous member(3) filled in the outer protective means(1) is smaller than that of the filler members(4) filled in the first protecting tube(2).

10. A ceramic thermocouple for measuring the temperature of molten metal according to claim 5, wherein the outer protective means(1) is treated with either a cementation or a nitration.

11. A ceramic thermocouple for measuring the temperature of molten metal according to claim 5, wherein a part of the outer protective means(1) arranged on the outer side of the first protecting tube (2) constitutes a portion of the thermocouple to be immersed in the molten metal.

12. A ceramic thermocouple for measuring the temperature of molten metal according to claim 5, wherein the end of the outer protective means(1) is attached with a metal pipe(11) filled with ceramic fibers(12).

13. A ceramic thermocouple for measuring the temperature of molten metal according to claim 12, wherein ends of the metal strands(6,7) are connected with compensation conductors(13) extending through the metal pipe(11).

14. A ceramic thermocouple for measuring the temperature of molten metal according to claim 5, wherein the coating(1) forming the outer protective means(1) is made of a material selected from Mo-ZrO₂, Mo-ZrB₂ and Mo-ZrN.

15. A ceramic thermocouple for measuring the temperature of molten metal according to claim 1, wherein the outer protective means(22) is a third protecting tube(22) made of the cermet having resistance against loss by melting or melt-away resistance and arranged on the outside of the temperature measuring portion(29) of the first protecting tube(21) with its open end portion(30) projecting from the first protecting tube(21), and the first sealing members(28) comprise dense heat resisting members and heat resisting glass.

16. A ceramic thermocouple for measuring the temperature of molten metal according to claim 15, wherein a coating(24) is formed over an outer circumferential surface of the third protecting tube (22), the coating(24) being made of a material comprising Mo as a base scattered with one of ZrB₂ and ZrN, both having small thermal expansion coefficients and hardly reacting with iron.

17. A ceramic thermocouple for measuring the temperature of molten metal according to claim 15, wherein an intermediate layer(25) of glass containing SiO₂ as a main component is formed in a space between the first protecting tube(21) and the third protecting tube(22).

18. A ceramic thermocouple for measuring the temperature of molten metal according to claim 15, wherein air present in the open end portion(30) of the third protecting tube(22) projecting from the end of the first protecting tube(21) is trapped hermetically inside the open end portion(30) when immersed in the molten iron to prevent the molten iron from entering the open end portion(30).

19. A ceramic thermocouple for measuring the temperature of molten metal according to claim 15, wherein a front end portion(34) of the temperature measuring portion is constructed in a two-layer structure comprising the first protecting tube(21) and the third protecting tube(22) arranged on the outside of the first protecting tube(21), and a heat capacity and a heat passage area of the front end portion(34) are made as small as possible to reduce heat transfer to a rear portion(35) of the first protecting tube(21).

20. A ceramic thermocouple for measuring the temperature of molten metal according to claim 1, wherein the outer protective means(42,44) is a fourth protecting tube(42) made of cermet having Mo as a base and mounted over the first protecting tube(41) through a heat insulating layer, and a coating(44) having a small thermal expansion coefficient and hardly reacting with iron is arranged on an outer surface of the first protecting tube(41).

21. A ceramic thermocouple for measuring the temperature of molten metal according to claim 20, wherein the coating(44) is a flame-sprayed coating made of any one, or a combination, of Mo-ZrN, Mo-ZrB₂ and Mo-ZrO₂, all having small thermal expansion coefficients and hardly reacting with iron.

22. A ceramic thermocouple for measuring the temperature of molten metal according to claim 20, wherein the filler members(43) are reaction-sintered silicon nitride having an additive of Ti.

23. A ceramic thermocouple for measuring the temperature of molten metal according to claim 20, wherein the filler members(43) are a dehydration condensed-heat resisting glass containing P, SiO₂ and the like.

24. A ceramic thermocouple for measuring the temperature of molten metal according to claim 20, wherein the first protecting tube(41) is formed into a size of 5 mm or less in outer diameter.

25. A ceramic thermocouple for measuring the temperature of molten metal according to claim 20, wherein the heat insulating layer(45) interposed between the first protecting tube(41) and the fourth protecting tube(42) comprises a heat insulating air layer and ceramic fibers to prevent an outflow of heat from a side surface of the first protecting tube(41).

26. A ceramic thermocouple for measuring the temperature of molten metal according to claim 20, wherein end portions of the first protecting tube(41) and the fourth protecting tube(42) opposite the temperature measuring portion are secured to a metal support pipe(58) by a collet chuck(62) with a space between the first protecting tube(41) and the fourth protecting tube(42) closed.
